# EUROPEAN PATENT APPLICATION

(11) **EP 4 407 548 A2**
(43) Date of publication of application: **31.07.2024**
(21) Application number: 24177016.3
(22) Date of filing: 21.05.2024
(51) Int. Cl.: G06Q 30/04, G06Q 20/38, H04L 9/32, H04L 9/00

(54) **METHOD AND SYSTEM FOR PROVIDING A SECURE TRANSACTION PROCESS**

(71) Applicant: Oxinus Holding Limited, Abu Dhabi (AE)
(72) Inventor: Pilafas, Spyridon, Abu Dhabi (AE)
(74) Representative: Hoffmann Eitle

(57) **Abstract**

Provided is a method for providing a secure transaction process, such as an invoicing process. The method comprises the steps of creating, by a processing device comprising a public key published on a public blockchain and a private key, an invoice; signing, by the processing device, the invoice with the private key of the processing device; transmitting, by the processing device, the signed invoice to a central platform unit serving a central platform; and determining, by the central platform unit, whether to store the signed invoice on a private blockchain.

## Description

### TECHNICAL FIELD

The present invention relates to the field of secure transactions. In particular, the present invention relates to a method and system for providing a secure invoicing process.

### BACKGROUND

In the evolving era of technology, the need for secure, transparent, and efficient solutions are often critical for success. For example, even the financial landscape is undergoing a profound transformation, wherein improved technical solutions providing security, transparency, and efficiency are often required.

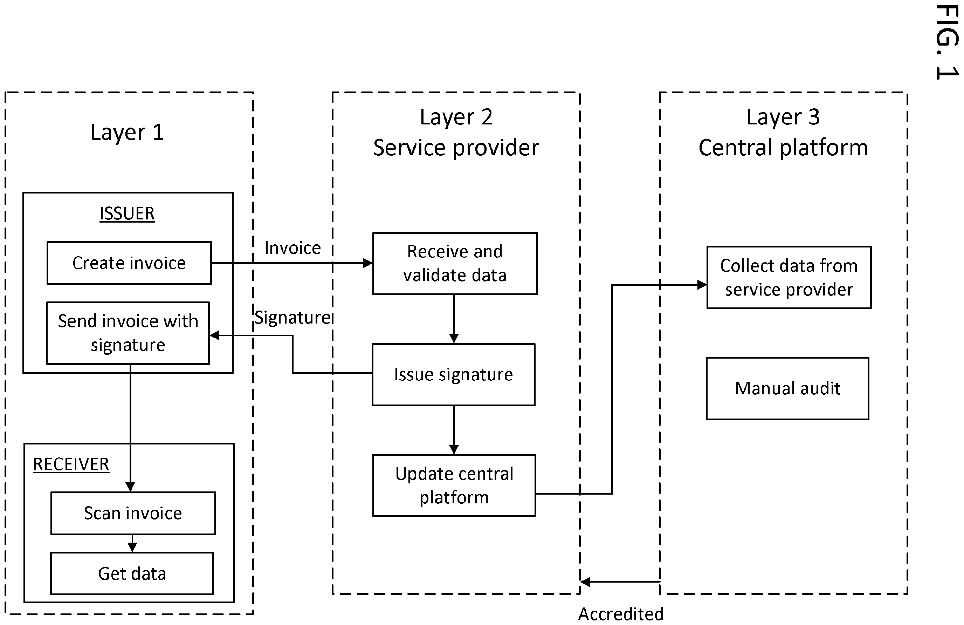

FIG. 1 shows an exemplary system to discuss loopholes, scalability limitation, fragmented processes, and security concerns of the currently available systems providing invoicing processes.

Specifically, FIG. 1 shows a decentralized process flow for an invoicing process which is similar to processes used nowadays. In FIG. 1, three layers are illustrated, wherein layer 1 refers to an issuer and a receiver, layer 2 refers to a service provider (SP), and layer 3 refers to a central platform. For example, the central platform is a central government platform served by a tax authority or any other government authority.

As shown in FIG. 1, the issuer, such as a business and company, creates an invoice with all relevant information. The invoice may be an electronic invoice (eInvoice). The invoice is sent from the issuer to the service provider. Thus, the invoice is integrated with the service provider. Thereafter, the issuer receives a signature, such as a Unique Identifier Number, from the service provider for signing the invoice. This allows the issuer to send the invoice with the signature to the receiver. The receiver is, for example, a customer or any other recipient for the invoice.

The service provider is usually accredited from the central platform, such as a tax authority serving the central platform. The service provider receives and validates data, such as the invoice, from the issuer. The service provider allows the issuer to send the invoice to the receiver. Furthermore, the service provider updates the central platform by forwarding the data, such as the invoice, to the central platform. The central platform stores the data and the operator of the central platform, such as the tax authority, may run manual audits on the stored data.

The receiver can scan the invoice to obtain data from the invoice and validate the data. For example, the invoice is provided with a QR code that the receiver can scan to validate the data.

As described above with respect to FIG. 1, an additional layer (see layer 2) is positioned between the issuer and the central platform. The role of layer 2 including the service provider is merely to receive, validate, and transmit data. This layer does not contribute to any extra security measure or control and is only limited to validating basic data.

As can be derived from FIG. 1, the Unique Invoice Identifier Number is handled by the authorities, such as the tax authorities, and a QR code for the invoice is generated. When the receiver gets the invoice and scans this QR code, the receiver is taken to the website of the service provider where all the invoice details are available.

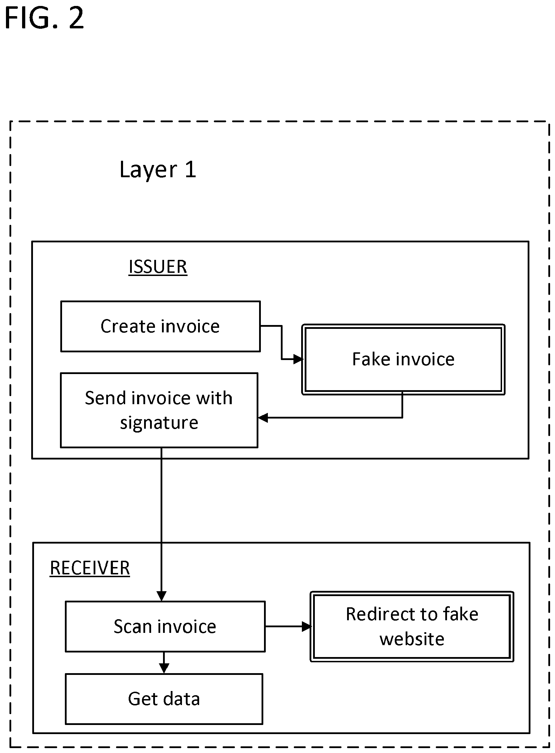

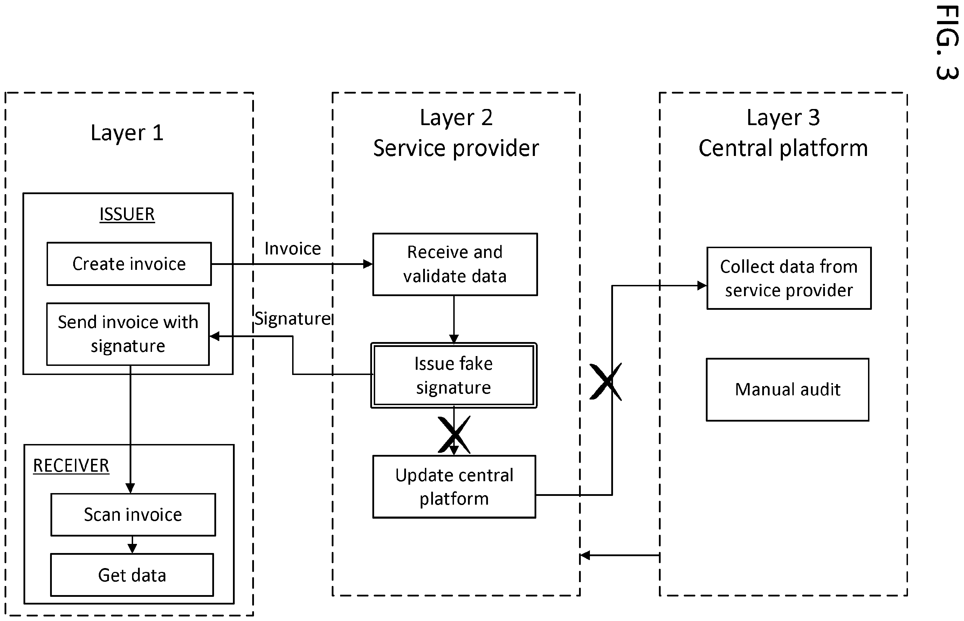

However, there are several challenges regarding the above exemplary system:
1. Data Validation: It is up to the service provider which data is provided to the receiver as invoice data and which data is sent to the central platform for the tax authority, for example.
2. QR Code Authenticity: The issuer can create fake invoices with fake QR codes that lead to a website. The receiver is redirected to a fake website and needs to verify if the website is trustworthy or authentic. This leads to serious security risks for the receiver and increases the workload for the receiver, because the receiver needs to determine whether or not the invoice is fake. This is also shown in FIG. 2.
3. Dependency on Service Provider Trust: Tax authorities or other operators of the central platform must rely on trusting the service providers for receiving the right and full transactions. As shown in FIG. 3, the service provider may decide not to update the central platform by not forwarding the relevant invoice data to the central platform. It is very difficult for the tax authorities to find out whether the service provider can be trusted and whether the central platform is correctly and fully updated.
4. Manual Audit: Keeping an eye on potential manipulations and misuse requires manual effort by the tax authorities.

The entire process described above may create a loophole for parallel operations that will not be tracked unless an audit is conducted.

Thus, a new solution is required which decreases and overcomes the challenges described above, for example faced by tax authorities and business alike.

### SUMMARY

It may be an object of the invention to provide techniques and methods for enhancing security, ensuring authenticity, fostering interoperability, and/or improving audit processing.

According to an aspect, a method for providing a secure invoicing process is provided. The method comprises the steps of creating, by a processing device comprising a public key published on a public blockchain and a private key, an invoice, signing, by the processing device, the invoice with the private key of the processing device, and transmitting, by the processing device, the signed invoice to a central platform unit serving a central platform. Furthermore, the method comprises the step of determining, by the central platform unit, whether to store the signed invoice on a private blockchain.

According to another aspect, a system for providing a secure invoicing process is provided. The system comprises a processing device and a central platform unit. The processing device comprises a public key published on a public blockchain and a private key and is configured to create an invoice, sign the invoice with the private key of the processing device, and transmit the signed invoice to the central platform unit serving a central platform. The central platform unit is configured to store the signed invoice on a private blockchain.

### BRIEF DESCRIPTION OF THE DRAWINGS

FIG. 1 shows an exemplary system for an invoicing process.
FIG. 2 shows a possibility of creating fake invoices with fake QR codes when using the exemplary system.
FIG. 3 shows the impacts of an untrustworthy service provider.
FIG. 4 shows a method for providing a secure invoicing process according to an embodiment.
FIG. 5 shows a system comprising a processing device and a central platform unit for providing a secure invoicing process according to an embodiment.
FIG. 6 shows a system for registering a processing device on a central platform according to an embodiment.
FIG. 7 shows a method for providing a secure invoicing process according to another embodiment.
FIG. 8 shows a system comprising a processing device, a central platform unit, and a service provider for providing a secure invoicing process according to another embodiment.
FIG. 9 shows a system comprising a processing device, a central platform unit, a service provider, and a user device for providing a secure invoicing process according to another embodiment.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where a step must necessarily follow or precede another step due to some dependency. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

In the following, a new solution for secure transactions, such as financial transactions, is described. The below solution is meticulously designed to decrease and overcome the challenges faced by tax authorities, or any other operators operating a central platform, and businesses alike, offering a seamless and advanced approach to financial operations, for example.

It is noted that the methods and systems below are often described for providing a secure invoicing process. However, the below methods and systems are not limited to invoices and the methods and systems can be used for any other transactions and processes where documents need to be securely created and distributed. In this regard, creating an invoice is just an example in this process but the benefit of the invention is equally for other documents. For example, instead of an invoice, the processes and systems described herein may be applied to contracts or official documents.

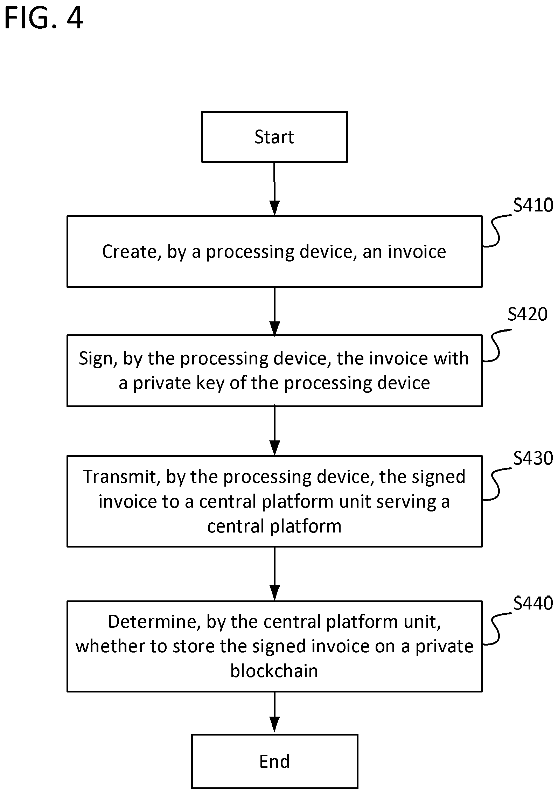

FIG. 4 shows a method for providing a secure invoicing process according to an embodiment. The method may comprise the step of creating (S410), by a processing device, an invoice. The processing device may be a device used by an issuer of an invoice, such as an eInvoice. For example, the processing device is a virtual fiscal device. Compared to the exemplary system illustrated in FIG. 1, the processing device may belong to layer 1 and may be used by a business or company to create invoices. The processing device may further store a sequence of invoice numbers, such as Unique identifications (IDs) for eInvoices, in order to be able to identify each invoice created by the processing device.

The processing device may comprise a public key published on a public blockchain and a private key. Publishing the public key on a public blockchain means that any public blockchain technology can be used for storing or recording the public key of the processing device for attestation. Both the public key and the private key are impossible to counterfeit, ensuring the authenticity of each issuer, transaction, and document (described in more details below).

The public blockchain, also called a permissionless blockchain, may be a network that anyone can freely access and participate in. If there are more than one processing device present, each processing device can freely access the public blockchain and the public blockchain may record the public keys of each processing device. Further advantages of the public blockchain are that the public blockchain is transparent, i.e. the public keys recorded there are traceable and accessible to the public, highly decentralized, i.e. there is no single entity or group controlling operations within the network, trustless, i.e. users can execute transactions via the network in a peer-to-peer manner without relying on the trust of a third party, and censorship-resistant, i.e. no entity can restrict anyone from participating in the operations of the public blockchain network. By recording the public keys on the public blockchain, everyone can derive the public keys for verifying authentication of the invoice, as described later.

The private key of the processing device must be kept secret and is therefore not published on the public blockchain. For example, the private key is securely stored on the processing device. The public key and the private key are known in the field of public-key cryptography, or asymmetric cryptography, where pairs of related keys are used. Each key pair, consisting of the public key and a corresponding private key, may be generated with known cryptographic algorithms.

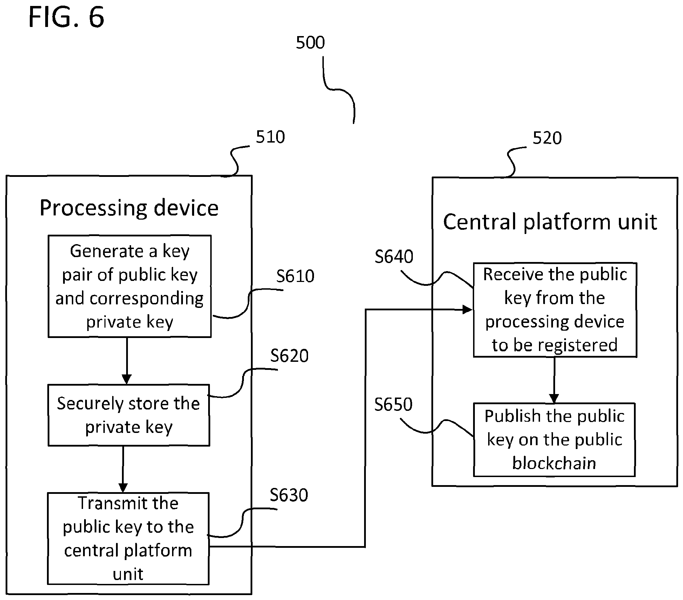

For example, the processing device generates or issues the key pair of public key and corresponding private key and transmits the public key from the processing device to a central platform unit serving a central platform. The central platform unit may publish the public key on the public blockchain. The central platform may be a central government platform, such as a platform operated by the tax authority. It is not necessary to perform the steps of generating the key pair and transmitting the public key to the central platform unit each time an invoice is created. These steps may be performed once during an onboarding process where the company using the processing device may be registered on the central platform and the processing device used for issuing the invoice may be added. Adding the processing device may mean adding, i.e. publishing, the public key of the processing device to the public blockchain. The registration process is described in more detail with respect to FIG. 6 below.

Referring back to FIG. 4, the method may further comprise the step of signing (S420), by the processing device, the previously created invoice with the private key of the processing device and transmitting (S430), by the processing device, the signed invoice to the central platform unit serving the central platform. Thus, every invoice issued by a business or company may be signed with the private key of the processing device, even when the processing device is offline. The invoices may be marked, signed securely by the private key and submitted to the central platform to avoid counterfeiting or duplication.

The central platform unit may determine (S440) whether to store the signed invoice on a private blockchain. The private blockchain is used to keep records of all activities. The private blockchain, also called permissioned blockchain, limits access to approved users and may be controlled by a single person, organization, or a group of individuals. For example, the private blockchain is controlled by the operator of the central platform, such as by the tax authority. Advantages of the private blockchain are their scalability and discreteness due to its limited access. The private blockchain is used for storing or recording the signed invoices to ensure that the invoice data cannot be freely accessed to everyone. Thus, the signed invoices are securely stored.

By providing a public blockchain and a private blockchain, authenticity can be enhanced. The validation of the invoices and the issuers of the invoices can be verified against the public and private blockchains. Further details regarding authenticity processes are provided below.

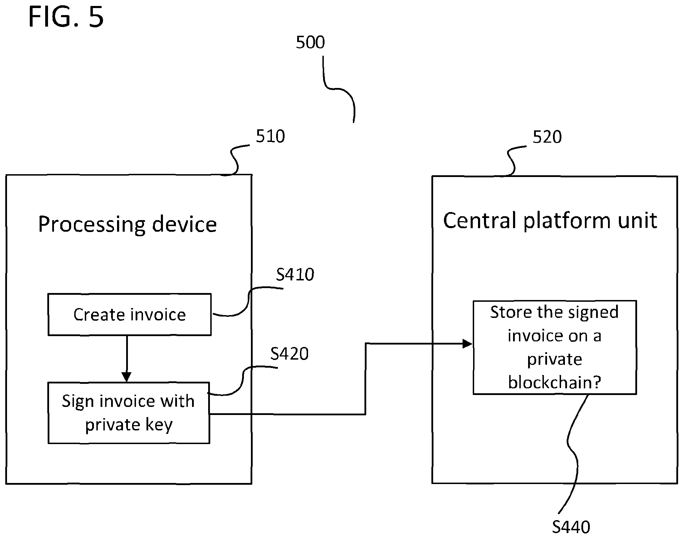

FIG. 5 shows a system 500 comprising a processing device 510 and a central platform unit 520 for providing a secure invoicing process according to an embodiment. The processing device 510 and the central platform unit 520 may be equal to the processing device and central platform unit described with respect to FIG. 4. Thus, a detailed description of the processing device and central platform unit is omitted at this point for conciseness reasons.

In FIG. 5, the steps S410, S420, and S440 of FIG. 4 are shown, wherein the processing device 510 creates the invoice (step S410) and signs the invoice with the private key (step S420) . Here, the signed invoice is transmitted from the processing device 510 to the central platform unit 520 serving the central platform, wherein the central platform unit 520 determines whether to store the signed invoice on the private blockchain (step S440). Thus, the system operates under centralized governance by the operator of the central platform, such as the tax authority using a central government platform, where all the keys are issued and invoice data is stored.

In this embodiment, the signed invoice is directly sent from the processing device 510 to the central platform unit 520. Thus, if compared to the system shown in FIG. 1, only two layers are needed, layer 1 with the processing device 510 and layer 3 with the central platform unit 520. Layer 2 with the service provider is no longer required, leading to a more secure and efficient invoicing process.

As already mentioned above, a registration process may be performed to register the processing device on the central platform. This registration process may be performed once before the processing device creates the first invoice. FIG. 6 illustrates an exemplary registration process for a processing device 510 and a central platform unit 520. The processing device 510 and the central platform unit 520 may be equal to the processing devices and central platform units described with respect to FIGs. 4 and 5. Thus, a detailed description of the processing device and central platform unit is omitted at this point for conciseness reasons.

According to an example, the processing device 510 may generate a key pair of public key and corresponding private key for the registration process (see step S610 in FIG. 6). The processing device 510 may securely store the private key (see step S620) and may transmit the public key to the central platform unit 520 (see step S630).

The central platform unit 520 may receive the public key from the processing device 510 to be registered (see step S640) and may publish the public key on a public blockchain (see step S650) . Thus, the public keys can be derived from the public blockchain when it is desired to verify authentication of an invoice.

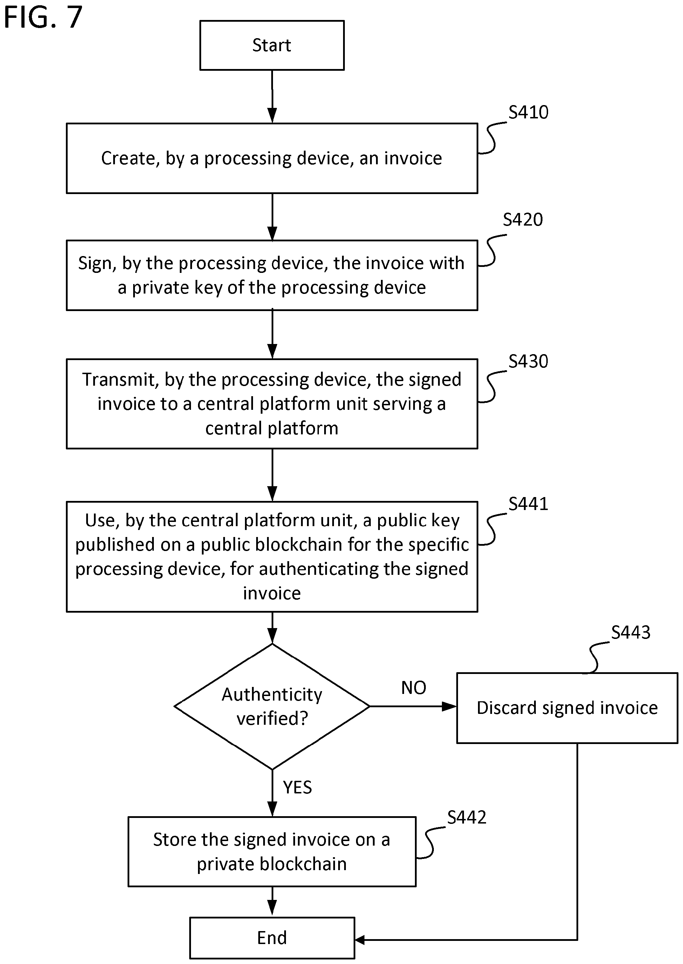

FIG. 7 shows a method for providing a secure invoicing process according to another embodiment. In FIG. 7, the steps S410, S420, and S430 are equal to the steps S410, S420, and S430 of FIGs. 4 and 5. Thus, a detailed description of these steps is omitted at this point for conciseness reasons, and it is referred to the description given above.

As previously described, the central platform unit 520 may determine (S440) whether to store the signed invoice on a private blockchain. For example, the central platform unit 520 performs an authentication process to analyze the signed invoice and determine whether to store the signed invoice on the private blockchain. The authentication process is exemplary described with respect to FIG. 7.

According to an example, for determining whether to store the signed invoice on the private blockchain, the central platform unit 520 uses (S441) the public key published on the public blockchain for the specific processing device, which has transmitted the signed invoice, for authenticating the signed invoice. If the authenticity of the signed invoice is verified by the central platform unit 520 (YES in FIG. 7), the central platform unit 520 may store the signed invoice on the private blockchain. If the authenticity of the signed invoice is not verified by the central platform unit 520 (NO in FIG. 7), the central platform unit 520 may discard S443 the signed invoice. This means that the signed invoice is not stored on the private blockchain. This works because of the public key - private key relationship. To create a digital signature, the processing device 510 signs each created invoice using its private key. When the central processing unit 520 receives the signed invoice from the processing device 510, the central processing unit 520 can verify that the signature on the invoice came from the processing device 510 by using its public key. If the signature is present and it matches the public key of the processing device 510, the central processing unit 520 can proceed with confidence that the source of the invoice is in fact the processing device 510.

Thus, it is ensured that only authenticated invoices are stored on the private blockchain, i.e. invoices for which it has been verified that the issuer of the invoice is who the issuer claims to be. In other words, the source of the invoice is authenticated and can be trusted. This means that it is ensured that only invoices from trusted sources are stored by the central platform unit 520 on the private blockchain, ensuring authenticity and enhancing security.

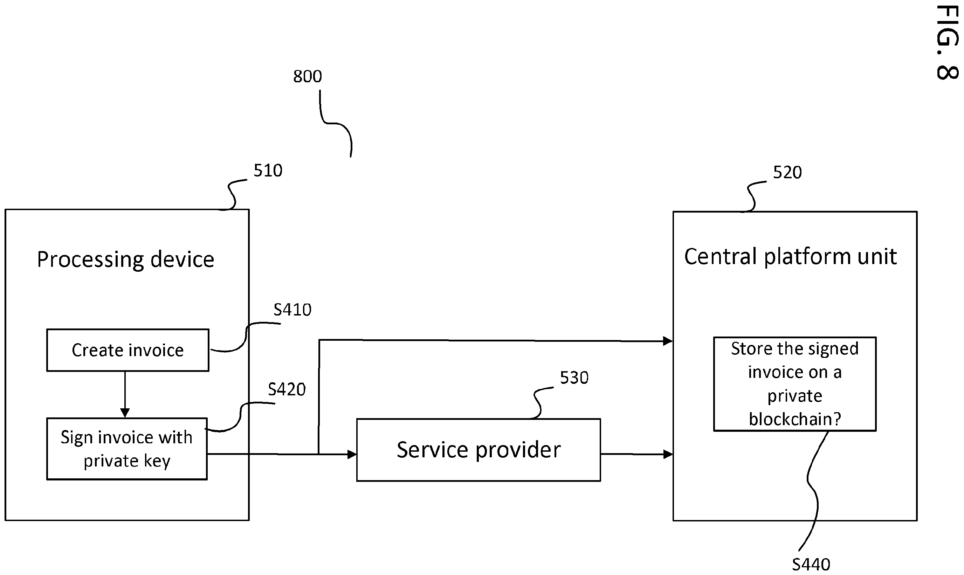

As described above, the processing device 510 may directly transmit the signed invoice to the central processing unit 520. According to another embodiment, it is also possible to introduce a service provider which receives the signed invoice from the processing device 510 and ensures that the signed invoice is transmitted to the central processing unit 520. Thus, when transmitting, by the processing device 510, the signed invoice to the central processing unit 520, a service provider may be used. By using a service provider, an offline modus for the processing device 510 can be introduced. This is exemplary shown in FIG. 8.

FIG. 8 shows a system 800 comprising the processing device 510, the central platform unit 520, and a service provider 530 for providing a secure invoicing process. The processing device 510 and the central platform unit 520 have been described in detail above and, thus, a detailed description is omitted at this point.

After having created the invoice and signed the created invoice with the private key (see steps 410 and 420 described above), the processing device 510 may transmit the signed invoice to the central platform unit 520. This is done by either directly sending the signed invoice to the central platform unit 520 or sending the signed invoice to the service provider 530 which then sends the signed invoice to the central platform unit 520.

For example, the processing device 510 can be in an offline modus for power interruption. Offline modus means that the processing device 510 is offline and does not send any signals, not even invoices, to another unit. On the other hand, the processing device 510 sends signals and invoices to another unit when being in the online modus, for example when the power interruption has been overcome.

When being in the offline modus, the processing device 510 is not able to transmit any created invoices. In order to avoid that already created and signed invoices are lost during the offline modus, the processing device 510 may collect and store the signed invoices. Once the processing device 510 is in an online modus, the signed invoices stored during the offline modus may be transmitted from the processing device 510 to the service provider 530 or the central platform unit 520.

The service provider 530 may be an additional unit for ensuring authenticity and enhancing security. The service provider 530 may validate the invoice data received, authenticate the invoices received, and forward validated and authenticated invoices to the central platform unit 520. For example, the service provider 530 uses the public key published on the public blockchain for authenticating the signed invoice received from the processing device 510. Since the processing device 510 signs the created invoice using its private key to create a digital signature, the service provider 530 can verify that the signature on the invoice came from the processing device 510 by using its public key. The service provider 530 may transmit the signed invoice received from the processing device 510 to the central platform unit 520 if the authenticity of the signed invoice is verified by the service provider 530. Thus, it is ensured that only authenticated invoices are forwarded or pushed to the central platform, improving the security and authenticity of the whole system 800.

After having received the signed invoice either directly or indirectly, i.e. via the service provider 530, from the processing device 510, the central platform unit 520 may again determine whether to store the signed invoice on the private blockchain (see step S440 described above).

Thus, with the herewith described system, it is also possible to provide three layers, but the system goes further by introducing an offline modus for the processing device 510, robust blockchain security measures, and unforgeable validation keys. The herein described invoicing process may be called a hybrid approach to ensure not only the accuracy of the invoice data but also to guarantee the authenticity of those received, for example, through an offline workflow, contributing to a secure and reliable invoicing ecosystem.

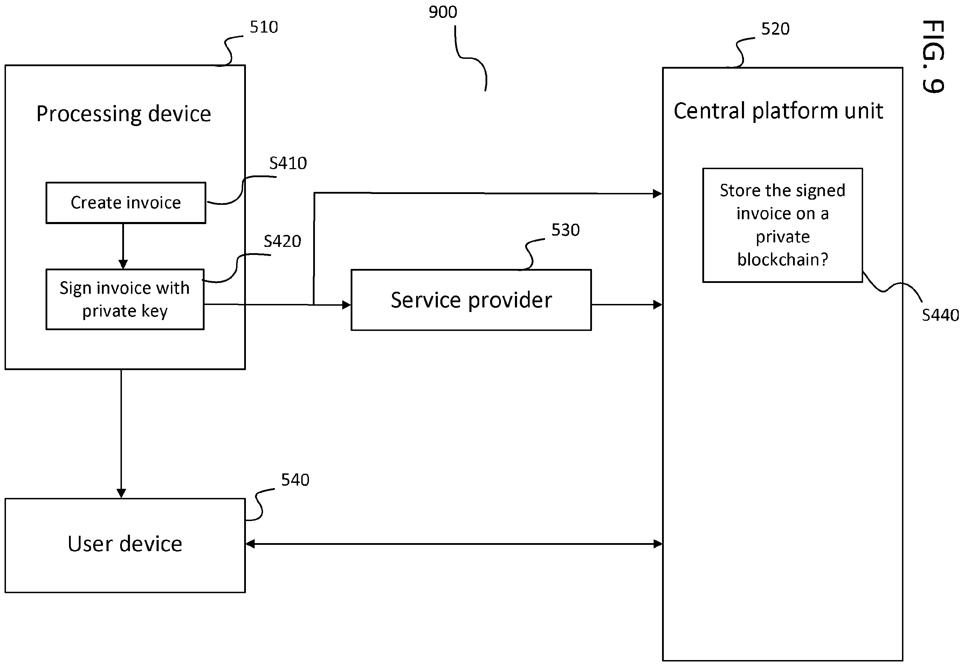

FIG. 9 shows another system 900 comprising the processing device 510, the central platform unit 520, optionally the service provider 530, and a user device 540 for providing a secure invoicing process according to another embodiment. The processing device 510, the central platform unit 520, and the service provider 530 have been described in detail above and, thus, a detailed description is omitted at this point. We also refer to the above-described steps S410, S420, S430, and S440 performed by the processing device 510 and the central platform unit 520.

As shown in FIG. 9, the system may further comprise the user device 540. The user device 540 may be any user terminal, such as a smartphone or the like, that is used by the receiver of the invoice. For example, the receiver of the invoice is a customer addressed by the invoice.

The user device 540 may be used for recording an invoice. For example, the issuer generates and signs an invoice and sends it to the user device 540. The invoice may include a QR code or any other code created for offline verification which the user device 540 can scan in order to obtain the invoice data. However, any other technique for obtaining the invoice data can be used, such as image processing or the like. The user device 540 may scan the invoice, e.g. the QR code of the invoice to verify the invoice against the blockchain data the validity of the displaying invoice data. The invoice to be recorded may be the signed invoice from the processing device 510 or a fake-singed invoice. If it is a fake-singed invoice, the user device 540 may automatically discard the invoice or an alert is given to warn the user of the user device 540 of a potential security risk. Thus, the security for the user is improved. The user device 540 may also alert the central platform unit 520.

If the invoice to be recorded is a signed invoice from the processing device 510, the user device 540 may use the public key from the public blockchain for authenticating the signed invoice. Since the public key is stored on the public blockchain, the user device 540 can easily derive the public key of the specific processing device 510. For verifying the authenticity of the signed invoice, the public key is shared by the central platform, for example, to a government application (App) installed on the user device 540. The government App may ensure that the invoices can be validated at any time by the user device 540, enabling businesses and consumers to easily verify the authenticity of invoices even for invoices issued offline. Since the processing device 510 signs the created invoice using its private key to create a digital signature, the user device 540 can verify that the signature on the invoice came from the processing device 510 by using its public key. If the signed invoice cannot be successfully authenticated, an alert may be given to warn the user device 540 that a security risk may result, for example, from a fake invoice.

According to another example, the user device 540 may record an invoice and may submit the recorded invoice to the central platform unit 520. For example, the invoice is the signed invoice created by the processing device 510. The central platform unit 520 may store the recorded invoice and compare the recorded invoice with data stored on the private blockchain. For example, the data stored on the private blockchain comprises signed invoices that have been previously received from the processing device 510 and stored on the private blockchain (see step S440 described above). If the recorded invoice and the data stored on the private blockchain mismatch, an alert may be transmitted from the central platform unit 520 to the user device 540. The alert may warn the user device 540 that the recorded invoice is unknown to the central platform unit 520, because it does not match with an invoice stored on the private blockchain. For example, the user device 540 displays the alert as a warning to the user of the user device 540. Also, the alert may serve as a prompt for the operator of the central platform, such as the tax authority, to initiate an audit.

As indicated above, all invoices, once recorded or scanned from consumers using the user device 540, may be securely stored within the central platform, such as a central government platform, and the system may wait for the submission of these invoices even if they were issued offline. When there are disparities, an alert may be automatically triggered for a mismatch between the submitted and stored invoices. This alert may additionally serve as a prompt for the operator of the central platform, such as the tax authority, to initiate an audit. Thus, security is enhanced and auditing processes are streamlined by proactively identifying potential issues and security risks.

As businesses and consumers may play a critical role as auditors in the system, the user device 540, optionally with a government App installed thereon, recording the invoices for authenticating the invoices may be a useful tool by offering benefits and a way that the business and consumers can be auditors of the system.

To further enhance security and streamline auditing processes, other advanced technologies may be incorporated, such as Artificial Intelligence (AI) reporting. For example, the system utilizes blockchain and AI reporting to generate red flags indicating potential misuse by identifying anomalies, such as processing devices operating outside the system or issues with the key sequence issued to businesses or fake processing devices. These red flags may serve as warnings, allowing prompt intervention and mitigating the risk of system abuse.

For AI reporting, the central platform unit 520 may use a trained Machine Learning (ML) model, such as a neural network trained with supervised learning techniques, for analyzing invoices recorded by the user device 540 and identifying security risks. For example, the trained ML model is used to detect inconsistencies in invoices recorded by the user device 540. The user device 540 may record the invoice and the recorded invoice may be transmitted to the central platform unit 520 which uses the trained ML model. The input of the trained ML model may be the invoice data of the recorded invoice. The output may be either an alert warning the central platform unit 520 that the recorded invoice has an anomaly, or a notification that the recorded invoice is correct. For example, if the trained ML model detects that a sequence of invoice numbers is missing in the recorded invoice, the trained ML model flags the system and alerts the central platform unit 520. Flagging the system may mean notifying the central platform unit 520 of a security risk. Depending on the output of the trained ML model, the central platform unit 520 may either send a warning to the user device 540, notifying the user of the user device 540 that there is a security risk, or may notify the user of the user device 540 that the recorded invoice is correct. Thus, the overall security of the system is improved.

The trained Machine Learning model may be trained on many labelled invoices in order to detect security risks. Labelled invoices mean that it is known whether or not the invoice with the respective invoice data is a security risk. Thus, the training data may comprise correlations between previous labelled invoices and security risk. With these correlations, the ML model can be trained, wherein the invoice data functions as input for the ML model and the indications regarding a security risk function as the outputs of the ML model.

As described above, the invoicing process is revolutionized by enhancing the security, ensuring authenticity, fostering interoperability, and empowering both businesses and users as auditors. Interoperability is secured by seamless communication and data exchange between business to exchange data through blockchain and convert consumers as auditors. A tool is provided to empower both businesses and consumers with benefits to scan the invoices. The innovative approach goes beyond the above exemplary systems by introducing an offline mode, robust blockchain security measures, and unforgeable validation keys. A comprehensive approach is employed to ensure the integrity and authenticity of every invoice issued by a business or company.

When comparing the above exemplary system (see FIG. 1) with the herein described systems, the advantages of the herein described systems become apparent:
The above exemplary system of FIG. 1 is decentralized to service providers. In contrast thereto, the herein described systems are centralized to the operator of the central platform, such as the tax authority.

Furthermore, the above exemplary system of FIG. 1 only allows an online modus. The herein described systems allow both an online and offline modus. The herein described systems can securely issue invoices and verify them offline.

With respect to reconciliation, it is said that the above exemplary system of FIG. 1 merely allows that the service provider submits a report to the central platform very rarely, for example only every end of the month. By providing a system as described here, no service provider is needed, and the central platform is updated in real-time.

Furthermore, the security mechanisms in the above exemplary system of FIG. 1 depend on the service provider. This bears various security risks if the service provider is untrustworthy. In contrast thereto, the herein described systems are blockchain secured, ensuring that no modification or alterations happen.

With respect to authentication mechanisms, the service provider in the above exemplary system of FIG. 1 secures them by issuing Unique IDs to invoices sent to them. In the herein described systems, signature keys issued to the devices registered from the central platform are used. The keys described herein are impossible to counterfeit, ensuring the authenticity of each issuer, transaction, and document.

Regarding scalability, the service provider of the above exemplary system of FIG. 1 is responsible for storing and processing invoices. In contrast thereto, the herein described system, is infinitely scalable.

Moreover, electronic data interchange (EDI) is a manual, non-standardized process in the above exemplary system of FIG. 1.

In contrast thereto, there is a central data exchange with blockchain secured interoperability in the herein described systems.

It is noted that the above-described methods may be computer-implemented. For example, a distributed server system or distributed computer system may be used for implementing the above-described method steps.

There is also generally considered a computer program product comprising instructions adapted for causing processing and/or control circuitry to carry out and/or control any method described herein with regard to the system, in particular when executed on the processing and/or control circuitry. Also, there is considered a carrier medium arrangement carrying and/or storing a computer program product as described herein.

It will be apparent to those skilled in the art that various modifications and variations can be made in the entities and methods of this invention as well as in the construction of this invention without departing from the scope or spirit of the invention.

The invention has been described in relation to particular embodiments and examples which are intended in all aspects to be illustrative rather than restrictive. Those skilled in the art will appreciate that many different combinations of hardware, software and/or firmware will be suitable for practicing the present invention.

Moreover, other implementations of the invention will be apparent to those skilled in the art from consideration of the specification and practice of the invention disclosed herein. It is intended that the specification and the examples be considered as exemplary only. To this end, it is to be understood that inventive aspects lie in less than all features of a single foregoing disclosed implementation or configuration. Thus, the true scope and spirit of the invention is indicated by the following claims.

## Claims

1. A method for providing a secure invoicing process, the method comprising the steps of:
creating, by a processing device comprising a public key published on a public blockchain and a private key, an invoice;
signing, by the processing device, the invoice with the private key of the processing device;
transmitting, by the processing device, the signed invoice to a central platform unit serving a central platform; and
determining, by the central platform unit, whether to store the signed invoice on a private blockchain.

2. The method according to claim 1, further comprising:
generating, by the processing device, the public key and the private key;
transmitting the public key from the processing device to the central platform unit; and
publishing, by the central platform unit, the public key on the public blockchain.

3. The method according to claim 1 or 2, wherein
when the processing device is in an offline modus, the signed invoice is stored by the processing device; and
once the processing device is in an online modus, the signed invoice stored during the offline modus is transmitted from the processing device to a service provider or the central platform unit.

4. The method according to claim 3, wherein the service provider uses the public key published on the public blockchain for authenticating the signed invoice received from the processing device.

5. The method according to claim 4, wherein the service provider transmits the signed invoice received from the processing device to the central platform unit if the authenticity of the signed invoice is verified by the service provider.

6. The method according to any one of claims 1 to 5, wherein, for determining whether to store the signed invoice on the private blockchain, the central platform unit uses the public key published on the public blockchain for authenticating the signed invoice.

7. The method according to claim 6, wherein the central platform unit stores the signed invoice on the private blockchain if the authenticity of the signed invoice is verified by the central platform unit.

8. The method according to any one of claims 1 to 7, further comprising:
recording, by a user device, an invoice.

9. The method according to claim 8, wherein the user device uses the public key from the public blockchain for authenticating the signed invoice.

10. The method according to claim 8 or 9, wherein
the user device records the invoice and submits the recorded invoice to the central platform unit,
the central platform unit stores the recorded invoice and compares the recorded invoice with data stored on the private blockchain, and
if the recorded invoice and the data stored on the private blockchain mismatch, an alert is transmitted from the central platform unit to the user device.

11. The method according to any one of claims 8 to 10, wherein the central processing unit uses a trained Machine Learning, ML, model to analyze the invoice recorded by the user device.

12. The method according to claim 11, wherein
if the trained ML model detects that a sequence of invoice numbers is missing in the recorded invoice, the trained ML model alerts the central platform unit.

13. The method according to any one of claims 1 to 12, wherein the processing device is a virtual fiscal device.

14. A system for providing a secure invoicing process, the system comprising a processing device and a central platform unit, wherein
the processing device comprises a public key published on a public blockchain and a private key and is configured to:
create an invoice;
sign the invoice with the private key of the processing device;
transmit the signed invoice to the central platform unit serving a central platform; and
the central platform unit is configured to store the signed invoice on a private blockchain.

15. The system according to claim 14, further configured to perform the method according to any one of claims 2 to 13.
